# EUROPÄISCHE PATENTSCHRIFT

(11) **EP 3 717 538 B1**
(45) Veröffentlichungstag und Bekanntmachung des Hinweises auf die Patenterteilung: **19.01.2022**
(21) Anmeldenummer: 18807344.9
(22) Anmeldetag: 27.11.2018
(51) Int. Cl.: C08G 18/48, C08G 18/76, C08G 18/12, C08G 18/18, C08G 18/30, C08L 75/08, C08J 9/14, C08G 101/00

(54) **REAKTIONSSYSTEM FÜR EINEN 1K-POLYURETHAN-HARTSCHAUMSTOFF**
REACTION SYSTEM FOR A 1K POLYURETHANE RIGID FOAM
SYSTEME DE RÉACTION POUR UNE MOUSSE DURE DE POLYURÉTHANE 1K

(30) Priorität: 30.11.2017 EP 17204620; 26.09.2018 EP 18196908
(43) Veröffentlichungstag der Anmeldung: 07.10.2020
(73) Patentinhaber: Covestro Deutschland AG, 51373 Leverkusen (DE)
(72) Erfinder: ARNTZ, Hans-Detlef, 51491 Overath (DE); KLASEN, Patrick, 52391 Vettweiß (DE); MICHELS, Erhard, 51061 Köln (DE)
(74) Vertreter: Levpat
(86) Internationale Anmeldenummer: PCT/EP2018/082737
(87) Internationale Veröffentlichungsnummer: WO 2019/105952

(56) Entgegenhaltungen:
- EP-A1- 3 077 435

## Beschreibung

Die vorliegende Erfindung betrifft ein Einkomponenten-Reaktionssystem (auch 1K-Reaktionssystem genannt) zur Herstellung von Polyurethan-Hartschaumstoffen (auch PUR-Hartschaumstoffe genannt) mit besonders guten Brandeigenschaften, sowie Verfahren zu dessen Herstellung und deren Verwendung. Die Erfindung betrifft auch die aus dem erfindungsgemäßen Einkomponenten-Reaktionssystem hergestellten Polyurethan-Hartschaumstoffe.

Das erfindungsgemäße Einkomponenten-Reaktionssystem umfasst die folgenden Bestandteile:
A) eine organische Polyisocyanatkomponente, die teilweise als Präpolymer vorliegt (im folgenden genannt "Semipräpolymer"),
   wobei die organische Polyisocyanatkomponente A) weiterhin dadurch gekennzeichnet ist, dass der Gehalt an freien, nicht mit Polyol reagierten Isocyanaten > 1 Gew.-% bis < 25 Gew.-% , bezogen auf das Gesamtgewicht der Komponente A), beträgt, und dass
   der NCO-Gehalt > 7,5 Gew.-% bis 13,0 Gew.-%, insbesondere > 8,0 bis < 13,0 Gew.-%, bezogen auf das Gesamtgewicht der Komponente A), beträgt,
B) ggfls. eine isocyanatreaktive Komponente, deren isocyanatreaktiven funktionellen Gruppen ausschließlich solche mit wenigstens einem Zerewitinoff-aktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0°C und gegebenenfalls Co-Treibmittel, sowie
F) gegebenenfalls Hilfs- und Zusatzstoffe,
dadurch gekennzeichnet, dass
das Semipräpolymer durch Umsetzung von
A.1) einer organischen Polyisocyanatkomponente A.1), welche zu mindestens 80 Gew.-% aus den monomeren Diphenylmethandiisocyanaten 2,4'-MDI, 2,2'-MDI und/oder 4,4'-MDI (im Folgenden einzeln oder gemeinsam "monomeres MDI" oder "mMDI" genannt) besteht, und
A.2) einer Polyolkomponente A.2) mit einer Funktionalität Fₙ (bezogen auf die Zerewitinoff-aktiven Wasserstoffatome in der Polyolkomponente) von ≥ 2,0 bis ≤ 3,0 und einer OH-Zahl von 28 bis 350 mg KOH/g gebildet wird,
   und
   wobei der Anteil der Komponente B) 0,00 Gew.-% bis 0,45 Gew.-%, bezogen auf das Gesamtgewicht der Komponenten A) bis F), beträgt.

Die Erfindung betrifft ferner ein Verfahren zur Herstellung eines Einkomponenten-Reaktionssystems, ein Verfahren zur Herstellung von Polyurethan-Hartschaumstoffen aus einem Einkomponenten-Reaktionssystem, einen Polyurethan-Hartschaumstoff, erhältlich aus einem Einkomponenten-Reaktionssystem, die Verwendung eines Einkomponenten-Reaktionssystems als Einkomponenten-Montageschaumstoff (auch 1K-Montageschaumstoff genannt), sowie einen Druckbehälter enthaltend ein Einkomponenten-Reaktionssystem und ein Treibmittel.

Die Herstellung von Polyurethan-Schaumstoffen aus Einwegdruckbehältern ist bekannt. Dabei wird ein isocyanatgruppenhaltiges Präpolymer durch Reaktion einer Polyolkomponente unter Zusatz von Schaumstabilisatoren und Katalysatoren sowie gegebenenfalls von Weichmachern, Flammschutzmitteln, Vernetzern und weiteren Zusatzstoffen mit organischen Di- und/oder Polyisocyanaten hergestellt. Diese Umsetzung erfolgt normalerweise in Gegenwart von verflüssigtem Treibmittel in einem Druckbehälter. Nach Abschluss der Präpolymerbildung kann der Polyurethan-Schaumstoff dann über ein Ventil dosiert ausgetragen werden. Dabei besitzt der Polyurethan-Schaumstoff zuerst eine sahnige Konsistenz und härtet dann anschließend durch Einwirken der Umgebungsfeuchtigkeit, z.B. aus der Luft unter Volumenvergrößerung, aus. Bei solchen Schaumstoffen spricht man daher von Einkomponenten-Schaumstoffen (1K-Schaumstoffe).

Um die gewünschten Endeigenschaften des Schaumstoffes wie z.B. Härte oder Zellbeschaffenheit zu erhalten, wird mit einem deutlichen Überschuss des Isocyanats gegenüber der Polyolkomponenten gearbeitet. Auf diese Weise wird die sogenannte Vorverlängerung und damit die Molekulargewichtsverteilung des Präpolymers reguliert. Je geringer die Vorverlängerung des Präpolymers, desto enger ist die Molekulargewichtsverteilung und desto präziser einstellbar sind die Endeigenschaften des ausgehärteten PUR-Schaumstoffes.

Ein großes Anwendungsgebiet für 1K-Schaumstoffe ist die Bauindustrie, wo gewisse Brandschutznormen zu erfüllen sind. Die meisten Produkte enthalten polymeres MDI, d.h. Mischungen aus monomerem MDI und den höherkernigen, homologen Polyphenyl-polymethylenpolyisocyanaten, und weiterhin ein flüssiges Flammschutzmittel, z.B. Triethylphosphat (TEP) und/oder Tris(2-chlorpropyl)phosphat (TCPP), um die Anforderungen für eine E - Klassifizierung nach der Brandschutznorm DIN EN 13501-1 (2010) zu erfüllen. Die genannten Flammschutzmittel sind jedoch im Schaumstoff nicht chemisch gebunden und können mit der Zeit ausdiffundieren, wodurch sich die Brandeigenschaften ändern. Zum anderen stehen diese Flammschutzmittel aufgrund ihrer zunehmenden Verbreitung in der Umwelt und teilweise gesundheitsschädlicher Wirkung in der Kritik.

In WO 2015/082460 wird ein 1K-Reaktionssystem beschrieben, welches auf einem monomerarmen Polyisocyanat - Präpolymer mit einem NCO-Gehalt von weniger als 8 Gew.-% basiert und dessen Gehalt an freiem monomerem Isocyanat durch Destillation auf höchstens 1 Gew.-% reduziert wird. Unter bestimmten Bedingungen, nämlich bei Kombination von Ethylenoxid-haltigen Polyolen, Polyesterpolyolen oder bromierten einbaubaren Flammschutzmitteln mit einem bestimmten Stabilisator, können mit diesen Systemen auch ohne Zugabe nicht einbaubarer Flammschutzmittel 1K-Schaumstoffe mit Klasse - E - Brandverhalten erhalten werden. Nachteilig an der Verwendung von Isocyanaten auf Basis von MDI mit einem niedrigen Monomergehalt von < 1 Gew.-% ist allerdings, dass für seine Herstellung ein zusätzlicher Destillationsschritt notwendig ist und die hohe Viskosität des Isocyanats die Auswahl der Polyolkomponente beschränkt.

Der Einsatz von polymerem MDI wird beispielsweise in der DE 44 43 432 A1 offenbart, welche eine unter Druck stehende, Treibmittel enthaltende Isocyanat-Semipräpolymermischung, erhältlich durch Umsetzung eines Polyisocyanats mit mindestens einer Polyhydroxyverbindung in Gegenwart von Monoalkoholen oder Hydroxyketonen mit 1 - 25 Kohlenstoffatomen beschreibt. In den Beispielen wird ein polymeres MDI mit einem Gehalt von 48 % monomerem MDI eingesetzt. Brandeigenschaften werden nicht offenbart.

Ausgehend vom Stand der Technik bestand die Aufgabe der vorliegenden Erfindung darin, eine 1K-Polyurethan-Formulierung auf Basis eines entsprechenden Semipräpolymers zur Verfügung zu stellen, die gut austragbare und gleichzeitig nach dem Aushärten feste Polyurethan-Hartschaumstoffe liefert, welche auch ohne Zusatz von Flammschutzmitteln und bei niedrigem Gesamthalogengehalt (< 200 ppm) gute Brandeigenschaften und gleichzeitig gute Verarbeitungseigenschaften aufweisen. Bevorzugt soll die 1K-Formulierung, zu Montageschaumstoffen verarbeitet, im Brandtest die E-Klassifizierung nach DIN EN 13501-1 (2010) erhalten und eine geringe Schwindung nach 1 Tag aufweisen.

Die Aufgabe wird gelöst durch ein Einkomponenten-Reaktionssystem zur Herstellung von Polyurethan-Hartschaumstoffen, umfassend die folgenden Bestandteile:
A) eine organische Polyisocyanatkomponente umfassend ein Semipräpolymer,
   wobei die organische Polyisocyanatkomponente A) weiterhin dadurch gekennzeichnet ist, dass der Gehalt an freien, nicht mit Polyol reagierten Isocyanaten > 1 Gew.-% bis < 25 Gew.-% , bezogen auf das Gesamtgewicht der Komponente A), beträgt, und dass
   der NCO-Gehalt > 7,5 Gew.-% bis 13,0 Gew.-%, insbesondere > 8,0 bis < 13,0 Gew.-%, bezogen auf das Gesamtgewicht der Komponente A), beträgt,
B) ggfls. eine isocyanatreaktive Komponente, deren isocyanatreaktiven funktionellen Gruppen ausschließlich solche mit wenigstens einem Zerewitinoff-aktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0°C und gegebenenfalls Co-Treibmittel, sowie
F) gegebenenfalls Hilfs- und Zusatzstoffe,
dadurch gekennzeichnet, dass
das Semipräpolymer durch Umsetzung von
A.1) einer organischen Polyisocyanatkomponente A.1), welche zu mindestens 80 Gew.-% aus den monomeren Diphenylmethandiisocyanaten 2,4'-MDI, 2,2'-MDI und/oder 4,4'-MDI besteht, und
A.2) einer Polyolkomponente A.2) mit einer Funktionalität Fₙ (bezogen auf die Zerewitinoff-aktiven Wasserstoffatome in der Polyolkomponente) von ≥ 2,0 bis ≤ 3,0 und einer OH-Zahl von 28 bis 350 mg KOH/g gebildet wird,
   und
   wobei der Anteil der Komponente B) 0,00 Gew.-% bis 0,45 Gew.-%, bezogen auf das Gesamtgewicht der Komponenten A) bis F), beträgt.

Mit "Semipräpolymer" im Sinne dieser Anmeldung wird ein Präpolymer bezeichnet, welches durch teilweise Umsetzung einer Isocyanatkomponente mit einer Polyolkomponente erhalten wird und welches noch freie, nicht umgesetzte Anteile der Isocyanatkomponente enthält.

Mit "Funktionalität Fₙ" eines Polyols / einer Polyolmischung ist im Sinne dieser Anmeldung die zahlengemittelte Funktionalität der Polyolmischung aus Polyol 1 ... Polyol i gemeint, berechnet mittels Fₙ = **∑** xᵢ Fᵢ mit xᵢ = Molenbruch und Fᵢ Starterfunktionalität des Polyols i.

Angaben der OH-Zahl für Mischungen beziehen sich auf die zahlenmittlere OH-Zahl, berechnet aus den OH-Zahlen der einzelnen Komponenten und werden gemäß DIN 53240-1 (2013) bestimmt.

Das Äquivalentgewicht gibt das Verhältnis der zahlenmittleren Molekulargewicht und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Mit "Molekulargewicht" oder "Molmasse" ist im Sinne dieser Anmeldung das zahlengewichtete mittlere Molekulargewicht gemeint.

Die Kennzahl (Index) gibt das prozentuale Verhältnis der tatsächlich eingesetzten IsocyanatMenge zur stöchiometrischen, d.h. für die Umsetzung der OH-Äquivalente berechneten Menge an Isocyanat-Gruppen (NCO)-Menge an.

Die zur Herstellung des Semipräpolymers verwendete organische Polyisocyanatkomponente A.1) enthält mindestens 80 Gew.-%, bevorzugt mindestens 85 Gew.-% und besonders bevorzugt mindestens 95 Gew.-% , bezogen auf das Gesamtgewicht von A.1), monomeres MDI. Daneben kann A.1) in geringen Anteilen weitere organische Isocyanate enthalten, z.B. die höherkernigen MDI - Typen ("oligomeres MDI"), 2,4- und 2,6-Toluylendiisocyanat sowie beliebige Gemische dieser Isomeren ("TDI"), und / oder weitere organische Polyisocyanate der aus der Polyurethanchemie an sich bekannten Art. Sind weitere Polyisocyanate anwesend, handelt es sich bei diesen in einer bevorzugten Ausführungsform um aromatische Polyisocyanate, insbesondere um oligomeres MDI und/oder TDI. In einer besonders bevorzugten Ausführungsform enthält die organische Polyisocyanatkomponente A.1) nur monomeres MDI, bzw. enthält höchstens produktionsbedingt technisch unvermeidbare Spuren an weiteren Isocyanaten.

Die organische Polyisocyanatkomponente A) kann weiterhin organische Polyisocyanate enthalten, welche erst nach der Präpolymerisierungsreaktion zugesetzt werden. Sind weitere Polyisocyanate anwesend, handelt es sich bei diesen in einer bevorzugten Ausführungsform um aromatische Polyisocyanate. Weitere Polyisocyanate werden aber maximal in einer solchen Menge zugesetzt, dass der Gehalt an freien, nicht mit Polyol reagierten Isocyanaten 25 Gew.-%,bezogen auf die Polyisocyanatkomponente A), nicht überschreitet. Besonders bevorzugt werden keine weiteren Polyisocyanate zugesetzt.

Bei der zur Herstellung des Semipräpolymers verwendeten Polyolkomponente A.2) handelt es sich um ein Polyetherpolyol oder um eine Polyolmischung umfassend mindestens ein Polyetherpolyol. In einer bevorzugten Ausführungsform enthält die Polyolmischung nur Polyetherpolyole. Die Polyolkomponente A.2) weist eine Funktionalität Fₙ (bezogen auf die Zerewitinoff-aktiven Wasserstoffatome in der Polyolkomponente) von ≥ 2,0 bis ≤ 3,0, bevorzugt von 2,2 bis 2,8 und insbesondere bevorzugt von 2,3 bis 2,7 auf, und eine mittlere OH-Zahl von 28 bis 350 mg KOH/g, bevorzugt von 56 bis 300 mg KOH/g, und besonders bevorzugt von 100 bis 280 mg KOH/g.

Bei dem Polyetherpolyol oder den Polyetherpolyolen der Komponente A.2) handelt es sich um Polyhydroxypolyether, welche auf an sich bekannte Weise durch Polyaddition von Alkylenoxiden an polyfunktionelle Starterverbindungen in Gegenwart von Katalysatoren hergestellt werden können. Bevorzugt werden die Polyhydroxypolyether aus einer Starterverbindung mit durchschnittlich 2 bis 8 aktiven Wasserstoffatomen und einem oder mehreren Alkylenoxiden hergestellt. Bevorzugte Starterverbindungen sind Moleküle mit zwei bis acht Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Triethanolamin, Glycerin, Trimethylolpropan, Pentaerythrit, Sorbit und Saccharose. Die Starterverbindungen können allein oder im Gemisch verwendet werden. Die Starterverbindung werden mit einem Alkylenoxid, bevorzugt mit Ethylenoxid und/oder Propylenoxid, hergestellt. Bei Verwendung im Gemisch ist es möglich, die Alkylenoxide statistisch und/oder blockweise umzusetzen. Ebenfalls geeignet sind solche höhermolekularen Polyhydroxypolyether, in denen hochmolekulare Polyaddukte bzw. Polykondensate oder Polymerisate in feindisperser, gelöster oder aufgepropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen A.2) ablaufen lässt (wie beispielsweise in DE-AS 1 168 075 beschrieben). Auch durch Vinylpolymerisate modifizierte Polyhydroxylverbindungen, wie sie z.B. durch Polymerisation von Styrol und Acrylnitril in Gegenwart von Polyethern (z.B. gemäß US-PS 3 383 351) erhalten werden, sind für das erfindungsgemäße Verfahren als Polyolkomponente A.2) geeignet. Vertreter der genannten Komponente A.2) sind z.B. im Kunststoff-Handbuch, Band VII "Polyurethane", 3. Auflage, Carl Hanser Verlag, München / Wien, 1993, Seiten 57 - 67 bzw. Seiten 88 -90 beschrieben.

Daneben kann die Komponente A.2) Anteile an weiteren Polyolen, z.B. Polyesterpolyole, Polyetheresterpolyole, Polycarbonatpolyole und/oder Polyether-Polycarbonatdiole, enthalten. Sind weitere Polyole anwesend, liegt deren Anteil vorzugsweise unter 25 Gew.-%, besonders bevorzugt unter 10 Gew.-% (bezogen auf das Gesamtgewicht der Komponente A.2).

Die organische Polyisocyanatkomponente A) ist weiterhin dadurch gekennzeichnet, dass der Gehalt an freien (d.h. nicht mit Polyol reagierten) Polyisocyanaten > 1 Gew.-% bis < 25 Gew.-%, bevorzugt > 5 Gew.-% bis < 22 Gew.-% , bezogen auf das Gesamtgewicht der Komponente A), beträgt. Hierunter wird im Rahmen der vorliegenden Erfindung verstanden, dass der Mindestgehalt unmittelbar nach dem Vermischen der einzelnen Komponenten des Reaktionssystems eingehalten werden muss. Der Gehalt an freiem Polyisocyanat in einer Polyisocyanatkomponente A), welche über einen Zeitraum von mehreren Tagen gelagert wird, kann sich gegebenenfalls noch verringern.

Weiterhin ist die organische Polyisocyanatkomponente A) dadurch gekennzeichnet, dass der NCO-Gehalt > 7,5 Gew.-% bis 13,0 Gew.-%, insbesondere > 8,0 Gew.-% bis 13,0 Gew.-% und besonders bevorzugt > 8,0 Gew.-% bis 12,0 Gew.-%, bezogen auf das Gesamtgewicht der Komponente A), beträgt.

Die Herstellung des Semipräpolymers kann im Prinzip auf jede dem Fachmann bekannte Weise erfolgen. In vorteilhafter Ausgestaltung wird diese durch Umsetzung von zumindest einer isocyanatreaktiven Verbindung mit einem Überschuss der organischen Polyisocyanatverbindung A.1), gegebenenfalls gefolgt von teilweisem Abdestillieren der nicht reagierten Polyisocyanatverbindung A.1) bis zum gewünschten Gehalt an freiem Isocyanat, hergestellt. Die Umsetzung der Komponenten A.1) und A.2) kann in Gegenwart einer die Präpolymerisierung katalysierenden Katalysatorkomponente ("Präpolymerisierungskatalysator") erfolgen, bevorzugt erfolgt die Umsetzung jedoch nicht in Gegenwart eines Präpolymerisierungskatalysators bzw. es sind höchstens technisch unvermeidbare Spuren eines Präpolymerisierungskatalysators anwesend.

Der erfindungsgemäße NCO-Gehalt beeinflusst die Viskosität der organischen Polyisocyanatkomponente A) in vorteilhafter Weise, insbesondere weist die organische Polyisocyanatkomponente A) eine Viskosität von 2000 mPas bis 30000 mPas, bevorzugt 28000 mPas, gemessen bei 50 °C nach DIN 53019 (2008) auf, ganz besonders bevorzugt ist 5000 mPas bis 25000 mPas. Dies ist besonders vorteilhaft, weil solche Polyisocyanatkomponenten A) noch gut weiter verarbeitbar sind.

Bei der isocyanatreaktiven Komponente B) handelt es sich um eine solche Komponente, deren isocyanatreaktiven funktionellen Gruppen ausschließlich solche mit wenigstens einem Zerewitinoff-aktiven Wasserstoffatom sind. Bevorzugt enthält B) mindestens ein Polyol oder besteht aus einem oder mehreren Polyolen, wobei das Polyol bzw. die Polyolmischung insbesondere
- eine (mittlere) OH-Zahl von 100 bis 400 mg KOH/g aufweist, vorzugsweise 150 bis 300 mg KOH/g und/ oder
- eine Funktionalität Fₙ von 1,0 bis 4,0 besitzt, bevorzugt 1,5 bis 3,5, besonders bevorzugt 1,8 bis 3,0, aufweist.

Besonders bevorzugte Polyole sind ausgewählt aus Polyetherpolyolen, Polyesterpolyolen und/ oder Polyetheresterpolyolen, insbesondere aus den oben unter der Komponente A.2) beschriebenen Polyhydroxypolyethern, bevorzugt aus einem Ethylenoxideinheiten aufweisenden Polyol, besonders bevorzugt aus einem Polyethylenpolyol. Vorzugsweise enthalten die Polyole auch keine tertiäre Aminogruppe in der Polymerkette gebunden, da solche Polyole katalytisch aktiv wirken.

Bevorzugt sind Ethylenoxid-reiche Polyetherpolyole mit Fₙ = 2 - 4, insbesondere enthaltend > 50 Gew.-% Ethylenoxid (bezogen auf die Massensumme der enthaltenen Alkylenoxide). Als Starterkomponenten kommen insbesondere solche mit einer Funktionalität zwischen 2 und 4 in Betracht, bevorzugt Glycerin, Trimethylolpropan, Pentaerythrit, Propylenglykol und Ethylenglykol, besonders bevorzugt Ethylenglykol. Die Starterverbindung werden mit den Alkylenoxiden, bevorzugt mit Ethylenoxid oder Ethylenoxid und Propylenoxid umgesetzt. Dies kann in statistischer und/oder blockweiser Weise erfolgen.

Das Verhältnis von organischer Polyisocyanatkomponente A) und isocyanatreaktiver Komponente B) wird im Reaktionssystem so eingestellt, dass ein Überschuss an Isocyanatgruppen resultiert. Der Anteil der isocyanatreaktiven Komponente B) beträgt 0,00 Gew.-% bis 0,45 Gew.-%, bevorzugt 0,00 Gew.-% bis 0,40 Gew.-%, besonders bevorzugt 0,00 Gew.-% bis 0,35 Gew.-% bezogen auf das Gesamtgewicht der Komponenten A) bis F).

Weiterhin enthält das Einkomponenten - Reaktionssystem mindestens einen Schaumstabilisator C). Dabei kann es sich um siliconhaltige Schaumstabilisatoren handeln, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol-A, alkyliertem Bisphenol-A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol-A. Als Alkoxylierungsreagenzien können beispielsweise Ethylenoxid und/oder Propylenoxid eingesetzt werden. Als Schaumstabilisatoren eignen sich insbesondere solche Schaumstabilisatoren, welche ausgewählt sind aus der Gruppe der Polyether-Polydialkoxysilan-Copolymere, wobei die Alkoxygruppen unabhängig voneinander insbesondere ausgewählt sind aus aliphatischen Kohlenwasserstoffresten mit einem bis zehn Kohlenstoffatomen, vorzugsweise aus Methyl-, Ethyl-, n-Propyl- oder i-Propyl-Resten.

Der Schaumstabilisator C) kann einen Trübungspunkt von wenigstens 40 °C aufweisen, insbesondere von wenigstens 50 °C, vorzugsweise von wenigstens 60 °C, gemessen in einer 4 Gew.-% wässrigen Lösung des Schaumstabilisators C) und schrittweise Erhöhung der Temperatur von 20 °C startend mit einer Aufheizrate von 2 °C/min und Ermittlung des Trübungspunktes durch optische Beurteilung des Zeitpunktes der einsetzenden Trübung. Dies ist von Vorteil, weil durch Einsatz solcher Schaumstabilisatoren die Brandschutzeigenschaften der erhaltenen Polyurethan-Hartschaumstoffe weiter gesteigert werden kann. Die vorgenannten Werte für den Trübungspunkt können alternativ auch nephelometrisch unter Heranziehung der DIN EN ISO 7027 (2000) bestimmt werden, ohne an die vorgenannte Verfahrensweise mit kombinierter Temperaturänderung gebunden zu sein. Ganz besonders bevorzugt sind solche Schaumstabilisatoren C), welche ein hohes Verhältnis von Ethylenoxid zu Propylenoxid in den Polyetherseitenketten der Silikon-Polyether-Copolymere aufweisen und gleichzeitig einen niedrigen (< 5) Dimethylsiloxananteil aufweisen. Beispiele hierfür gibt die Formel (I) wieder. 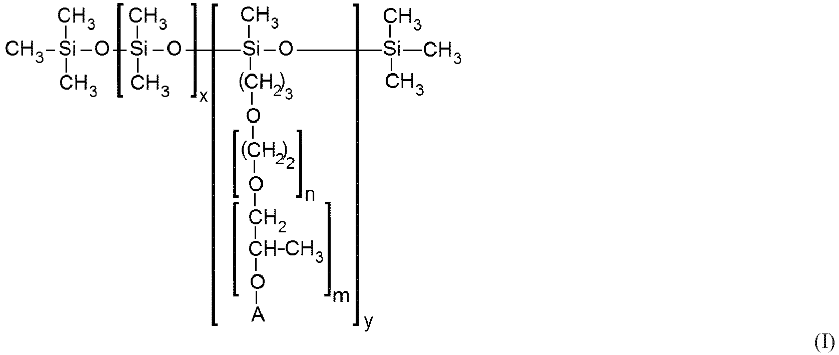 mit x, y = ganze Zahl > 0 und x/y = Dimethylsiloxananteil < 5,
n, m = ganze Zahl > 0 und n/m = Ethylenoxid / Propylenoxid - Verhältnis;
A = Aryl, Alkyl oder H

Die in Tabelle 1 angegebenen Strukturmerkmale beziehen sich auf die in Formel (I) gezeigte schematische Strukturformel typischer Silikonstabilisatoren. Solche Silikonstabilisatoren sind beispielsweise von den Firmen Schill+Seilacher GmbH oder Evonik Industries AG erhältlich. Von diesen Schaumstabilisatoren sind solche bevorzugt, deren OH-Zahl im Bereich von 90 - 130 mg KOH/g liegt (z.B. Schaumstabilisator 1 und 2).

**Tabelle 1**

| | X/Y Dimethylsiloxan Anteil | n/m EO/PO-Verhältnis | OH-Zahl mg KOH/g |
|---|---|---|---|
| Schaumstabilisator 1 | 2,73 | 1,66 | 100 -130 |
| Schaumstabilisator 2 | 3,64 | 1,89 | 90 -120 |
| Schaumstabilisator 3 | 9,44 | 0,51 | |
| Schaumstabilisator 4 | 9,4 | 1,09 | |
| Schaumstabilisator 5 | 9,89 | 2,33 | |

Bei dem erfindungsgemäßen Reaktionssystem kann als Katalysator D) prinzipiell jeder für diesen Zweck dem Fachmann als geeignet bekannter Katalysator verwendet werden, beispielsweise ein Aminkatalysator. Insbesondere ist Bis-(morpholino)-diethylether als Katalysator D) bevorzugt, da er besonders selektiv die Reaktion des Isocyanats mit Wasser katalysiert.

Das Reaktionssystem enthält weiterhin als Komponente E) wenigstens ein physikalisches Treibmittel mit einem Siedepunkt < 0 °C und gegebenenfalls Co-Treibmittel. Als Treibmittel sind Kohlenwasserstoffe bevorzugt, insbesondere die Isomeren des Propan und Butan. Als Co-Treibmittel sind ebenfalls physikalische Treibmittel mit einem Siedepunkt < 0 °C bevorzugt, welche zusätzlich noch eine emulgierende oder löslichkeitsvermittelnde Wirkung aufweisen. Bevorzugt wird als Co-Treibmittel Dimethylether eingesetzt.

Das Reaktionssystem kann daneben weitere Hilfs- und Zusatzstoffe F) enthalten, z.B. Flammschutzmittel, Zellregler, Weichmacher und Verdünner, wie z.B. langkettige Chlorparaffine und Paraffine, Pigmente oder Farbstoffe, oberflächenaktive Verbindungen und/oder Stabilisatoren gegen oxidativen, thermischen oder mikrobiellen Abbau bzw. Alterung.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Das Reaktionssystem kann ferner eine Säure, bevorzugt mit einem pKs-Wert von wenigstens 0, oder ein Säurederivat wie z.B. ein Säurechlorid, bevorzugt ein Säurechlorid einer aromatischen Carbonsäure, z.B. Phthalsäuredichlorid, enthalten, insbesondere in einer Menge von 10 bis 500 ppm bezogen auf die Menge an organischer Polyisocyanatkomponente A), vorzugsweise von 50 bis 300 ppm. Durch den Zusatz solcher Verbindungen kann eine Reaktion des Präpolymeren mit sich selbst weitestgehend unterdrückt werden, beispielsweise eine Allophanatisierung.

In einer bevorzugten Ausführungsform enthält das Reaktionssystem keine kurzkettigen Monoole oder Hydroxyketone. Als "kurzkettig" im Sinne dieser Anmeldung werden insbesondere solche Monoole bzw. Hydroxyketone bezeichnet, welche ein Molekulargewicht von < 200 g/mol aufweisen. Solche Verbindungen können als Zellöffner wirken, was hier nicht erwünscht ist.

Überraschenderweise wurde weiterhin gefunden, dass sich mit den erfindungsgemäßen 1K-Reaktionssystemen Polyurethan-Hartschaumstoffe mit vorteilhaften Brandeigenschaften, insbesondere eine E-Klassifizierung nach der Brandschutznorm DIN EN 13501-1 (2010) ohne (nennenswerten) weiteren Zusatz von Flammschutzmitteln einstellen lassen. Das ist vor allem deswegen überraschend, da dem durchschnittlichen Fachmann bekannt ist, dass normale PUR-Hartschaumstoffe auf der Basis von monomerem MDI sehr hohe Zusätze (20 Gew.-% - 50 Gew.-% bezogen auf die Polyolformulierung) an Flammschutzmitteln benötigen, um diese Brandanforderungen zu erreichen. Dagegen kommen Polyurethan/Polyisocyanurat-Hartschaumstoffe (PUR/PIR-Hartschaumstoffe) schon mit geringeren Zusätzen wie beispielsweise < 20 Gew.-% bezogen auf die Polyolformulierung an Flammschutzmittel aufgrund der inhärenten flammwidrigeren Eigenschaften des trimerisierten Polymers aus. Insofern enthält nach einer besonders bevorzugten Ausführungsform des erfindungsgemäßen Reaktionssystems dieses weniger als 5 Gew.-% eines Flammschutzmittels, bezogen auf das Gesamtgewicht der Komponenten A) bis F), insbesondere eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen. Bevorzugt enthält das Reaktionssystem weniger als 2 Gew.-%, vorzugsweise weniger als 1 Gew.-%, bezogen auf das Gesamtgewicht der Komponenten A) bis F), und besonders bevorzugt kein Flammschutzmittel.

Neben den bereits erwähnten ökologischen Vorteilen kann auch durch den Verzicht auf solche Flammschutzmittel die weichmachende Wirkung dieser Flammschutzmittel im aus dem Reaktionssystem erzeugten Polyurethan-Hartschaumstoff vermieden werden.

Ein bevorzugtes erfindungsgemäßes Reaktionssystem enthält oder besteht aus den folgenden Komponenten:
68 bis 90 Gew.-% organische Polyisocyanatkomponente A),
0,00 bis 0,45 Gew.-% isocyanatreaktive Komponente B),
0,1 bis 1,0 Gew.-% eines Schaumstabilisators C),
0,1 bis 1,0 Gew.-% an Katalysator D) und
9,8 bis 30,0 Gew.-% mindestens eines physikalischen Treibmittels mit einem Siedepunkt von weniger als 0 °C sowie gegebenenfalls Co-Treibmittel (Komponente E), und
0 bis 20 Gew.-% Hilfs- und Zusatzstoffe (Komponente F),
jeweils bezogen auf das Gesamtgewicht der Komponenten A) bis F).

Die bevorzugten Ausführungsformen können einzeln oder auch miteinander verknüpft ausgeführt werden.

Ein weiterer Gegenstand der vorliegenden Erfindung betrifft ein Verfahren zur Herstellung eines erfindungsgemäßen Einkomponenten-Reaktionssystems, umfassend die Schritte
i) Herstellung einer organischen Polyisocyanatkomponente A) mit einem Gehalt an freien, nicht reagierten Isocyanaten von > 1 Gew.-% bis < 25 Gew.-%, und einem NCO-Gehalt von > 8,0 Gew.-% bis < 13,0 Gew.-%, jeweils bezogen auf das Gesamtgewicht der Komponente A),
   durch Umsetzung von
   einer organischen Polyisocyanatkomponente A.1), welche zu mindestens 80 Gew.-% aus monomerem MDI besteht, und
   einer Polyolkomponente A.2) mit einer Funktionalität Fₙ (bezogen auf die Zerewitinoff-aktiven Wasserstoffatome in der Polyolkomponente) von ≥ 2,0 bis ≤ 3,0 und einer OH-Zahl von 28 bis 300 mg KOH/g
   zu einem Semipräpolymer, und
   (optional) Abmischen des so erhaltenen Semipräpolymers mit weiteren Polyisocyanaten
ii) ggfls. Umsetzung der in Schritt i) erhaltenen organischen Polyisocyanatkomponente A) mit einer isocyanatreaktiven Komponente B), deren isocyanatreaktive funktionelle Gruppen ausschließlich solche mit wenigstens einem Zerewitinoff-aktiven Wasserstoffatom sind,
   und Zusatz von
   mindestens einem Schaumstabilisator C),
   mindestens einem Katalysator D), der geeignet ist, die Reaktion des Semipräpolymers mit der Luftfeuchtigkeit zu katalysieren,
   mindestens einem physikalischen Treibmittel mit einem Siedepunkt von weniger als 0 °C und gegebenenfalls Co-Treibmittel (Komponente E), sowie
   gegebenenfalls Hilfs- und Zusatzstoffen (Komponente F).

Die Erfindung betrifft weiterhin ein Verfahren zur Herstellung eines Polyurethan-Hartschaumstoffs umfassend ein Verfahren zur Herstellung eines Einkomponenten-Reaktionssystems mit den Schritten i) und ii) und dem nachfolgenden Schritt
iii) Einwirken von Feuchtigkeit auf das in Schritt ii) hergestellte Einkomponenten-Reaktionssystem.

Die Erfindung betrifft des Weiteren ein Verfahren zur Herstellung von Polyurethan-Hartschaumstoffen, bei dem man die Komponenten A) bis F) eines erfindungsgemäßen Reaktionssystems miteinander vermischt und insbesondere unter Einwirkung von Feuchtigkeit reagieren lässt.

Ein weiterer Gegenstand der vorliegenden Erfindung ist ein Polyurethan-Hartschaumstoff, erhältlich durch Vermischen und Umsetzen der Komponenten A) bis F) eines erfindungsgemäßen Reaktionssystems.

Die Erfindung ist auch auf die Verwendung eines erfindungsgemäßen Reaktionssystems als 1K-Montageschaumstoff gerichtet, wobei das Reaktionssystem insbesondere in einen Druckbehälter, wie einen Einwegdruckbehälter, eingefüllt sind.

Schließlich betrifft die Erfindung auch einen Druckbehälter, insbesondere einen Einwegdruckbehälter, enthaltend ein erfindungsgemäßes Reaktionssystem.

In vorteilhafter Weise ist der Druckbehälter mit einem Dosierpistolen- oder Winkelaufsatz (Winkeladapter und Füllröhrchen) ausgerüstet. Als Druckbehälter eignen sich druckstabile Dosen oder gegebenenfalls auch größere Druckbehälter.

Die vorliegende Erfindung wird im Folgenden anhand von Ausführungsbeispielen näher erläutert.

### Experimenteller Teil

Die Herstellung der erfindungsgemäßen PUR-Hartschaumstoffe erfolgt nach einem dem Fachmann bekannten Zweistufenverfahren, bei dem die Reaktionskomponenten diskontinuierlich miteinander zur Reaktion gebracht werden und dann in bzw. auf geeignete Formen/Substrate/Hohlräume zur Aushärtung gebracht werden. Beispiele sind in USA-A 2 761 565, in G. Oertel (Hrsg.) "Kunststoff-Handbuch", Band VII, Carl Hanser Verlag, 3. Auflage, München 1993, S. 284 ff., sowie in K. Uhlig (Hrsg.) "Polyurethan Taschenbuch", Carl Hanser Verlag, 2. Auflage, Wien 2001, S. 83-102 beschrieben.

Die Messung der Hydroxylzahlen wurde gemäß der Norm DIN 53240-1 (2013) durchgeführt.

Die Viskositätsmessungen wurden gemäß der Norm DIN 53019 (2008) durchgeführt.

Für die Bestimmung des NCO-Gehalts im Polyisocyanat wurde die Norm EN ISO 11909 (2007) angewendet.

Der Gehalt an freiem (nicht mit Polyol reagierten) Isocyanat im Semipräpolymer wurde bestimmt nach einer validierten HPLC-Methode des externen Prüfinstituts Currenta GmbH & Co. OHG.

### Einsatzstoffe

- A.1-1: 4,4'-Diphenylmethadiisocyanat, NCO-Gehalt 33,6 Gew.-%, (Desmodur^{®} 44M, Fa.Covestro Deutschland AG)
- A.2-1: Glycerin-gestarteter Propylenoxidpolyether, Äqivalentgewicht 243 g/mol, OH-Zahl 235 mg KOH/g, Viskosität 250 mPas (bei 25°C)
- A.2-2: Propylenglykol-gestarteter Propylenoxidpolyether, Äqivalentgewicht 506 g/mol, OH-Zahl 112 mg KOH/g, Viskosität 140 mPas (bei 25°C)
- B-1: Polyethylenglykol, OH-Zahl 190 mg KOH/g, Viskosität 122 mPas (bei 25°C)
- C-1: Schaumstabilisator 1 (siehe Tabelle 1), Silikon-Polyether-Copolymer gemäß Formel (I) mit einem Dimethylsiloxan-Anteil von 2,73, einem EO/PO-Verhältnis von 1,66 und einer OH-Zahl von 100 bis 130 mg KOH/g
- D-1: 2,2-Dimorpholinyldimethylether (Fa. AirProducts)
- E-1: iso-Butan (Fa. Merck)
- E-2: Dimethylether (Fa. Merck)

### Herstellung des Semipräpolymers A-1

In einem 5L-Dreihalskolben mit Gaseinlass, Rückflusskühler, Rührer und Tropftrichter wird die benötigte Isocyanatmenge vorgelegt, mit Stickstoff beaufschlagt und unter Rühren auf eine Temperatur von 80°C aufgeheizt. Unter Einhalten dieser Temperatur wird das bzw. die Polyole zugegeben. Das Gemisch wird über 2 Stunden bei dieser Temperatur zur Vervollständigung des Umsatzes gerührt. Zur Charakterisierung des Produkts werden der NCO-Gehalt und die Viskosität bestimmt. Die Rezepturen sind der folgenden Tabelle 2 zu entnehmen.

**Tabelle 2**

| **Rezeptur** | | **A-1** |
|---|---|---|
| A.1-1 | Gew.-% ¹⁾ | 45,0 |
| A.2-1 | Gew.-% ¹⁾ | 22,44 |
| A.2-2 | Gew.-% ¹⁾ | 32,54 |
| NCO-Gehalt | Gew.-% ¹⁾ | 8,1 |
| Viskosität bei 50°C | mPas | 16000 |
| Freies Isocyanat im Semipräpolymer A-1 | Gew.-%¹⁾ | 14,3 |

| | | |
|---|---|---|
| ¹⁾ Die Angabe ist bezogen auf die Summe der Komponenten A.1-1, A.1-2 und A.2-1 = 100 Gew.-% | | |

Das Semipräpolymer A-1 wird als Polyisocyanatkomponente A) zur Herstellung der Einkomponenten-Reaktionssysteme eingesetzt (es werden keine weiteren Polyisocyanate zugesetzt).

### Herstellung der 1K-Formulierungen in Einweg-Druckbehältern

Zur Herstellung der 1K-Formulierungen in Einweg-Druckbehältern wurde nacheinander die benötigte Mengen des Semipräpolymers A-1 (Tabelle 2) in einem Mischbehälter vorgelegt und mit entsprechenden Mengen des Schaumstabilisators C-1, des Aminkatalysators D-1 und mit den in Tabelle 3 angegebenen Mengen eines weiteren Polyols vermischt. Anschließend wurde die Mischung in einen Einweg-Druckbehälter überführt und dieser dicht verschlossen. Sofern nicht anders angegeben, wurden von den in der Tabelle 3 aufgeführten 1K-Formulierungen je 500 mL in Einweg-Druckbehälter mit einem Fassungsvermögen von 1000 mL gefüllt. Über das aufgesetzte Ventil wurden mittels einer entsprechenden Dosiereinheit die benötigten Mengen der Treibmittel zugesetzt. Abschließend wurde der Einweg-Druckbehälter bis zur vollständigen Homogenisierung der 1K-Formulierting geschüttelt. Die so hergestellten 1K-Formulienmgen sind nachfolgend in den Beispielen der Tabelle 3 angegeben.

### Herstellung von Polyurethan-Freischäumen (PUR-Hartschaumstoffe)

Nach der Lagerung des mit der 1K-Formulierung gefüllten Einweg-Druckbehälters erfolgt der Austrag auf eine mit Wasser besprühte Papierlage (PE-beschichtetes Natronkraftpapier, 130 g/m², 595 x 160 mm²). Hierzu wird der Druckbehälter über Kopf in einer langsamen, linienziehenden Bewegung ohne Unterbrechung über das Papier geführt. Der PUR-Hartschaumstoff expandiert unter den aktuell vorherrschenden Bedingungen (Raumtemperatur, Normaldruck). Die zur Aushärtung erforderliche Feuchtigkeit wird über das Besprühen des Papiers mit Wasser geliefert. Diese Verfahrensweise ist unabhängig von der jeweilig vorherrschenden Luftfeuchtigkeit und liefert somit die reproduzierbarsten Ergebnisse.

### Messung der Abbindezeit

Die Abbindezeit wurde durch das Auftupfen eines Holzsiedestäbchens auf die Oberfläche des aufsteigenden PUR-Schaumstoffes gemessen. Die Abbindezeit ist erreicht, wenn durch das Auftupfen des Holzsiedestäbchen keine Fäden gezogen werden.

### Bewertung der Zellgröße

Die Zellgröße wird generell einen Tag nach erfolgtem Austrag am PUR-Hartschaumstoff subjektiv bewertet. Hierzu liegen dem in dieser Methodik erfahrenen Mitarbeiter entsprechende Vergleichsmuster vor, anhand derer die Bewertung gemäß eines Schulnotensystems vorgenommen wird. Daher bedeuten die hierzu angegebenen Zahlen: 1 = sehr gut, 2 = gut, 3 = befriedigend, 4 = ausreichend, 5 = mangelhaft, 6 = ungenügend.

### Herstellung von Prüfkörpern zur Messung der Brandeigenschaften

Die Brandeigenschaften werden an geschäumten Formteilen ermittelt. Hierzu wird ein in der Länge rechts und links mit Gipskartonplatten (700 mm x 90 mm x 12,5 mm) ausgekleideter, nach oben offener Schacht (700 mm x 90 mm x 55 mm) mit einem einzigen, ununterbrochenen Austrag ausgeschäumt. Die über die Länge von 700 mm oben überstehende Schaumstofffront wird so abgetrennt, dass die PUR-Hartschaumstoffschicht mit den Gipskartonplatten abschließt. Somit ergeben sich 700 mm lange und 90 mm hohe Sandwichelemente, die über die Dicke verteilt folgenden lagigen Aufbau haben: Gipskarton (12,5 mm), PUR-Hartschaumstoff (30 mm), Gipskarton (12,5 mm). Diese Elemente werden auf 190 mm abgelängt und einer Brandprüfung unterzogen. Dazu wird ein Kleinbrennertest gemäß DIN EN ISO 11925-2 (2010) (Kantenbeflammung) durchgeführt.

### Bestimmung der Schwindung / Dimensionsstabilität

Der PUR-Hartschaumstoff wird aus der Dose in eine Form (600 mm x 30 mm x 60 mm) ausgetragen, welche mit Papier ausgekleidet ist. Nach 1 Tag wird der entstandene PUR-Hartschaumstoffstrang aus der Form entnommen. In der Mitte des Stranges (bei 300 mm) wird die Dicke mit einem Dickenmesser gemessen. Das Verhältnis von PUR-Hartschaumstoffstrangdicke zur Formbreite (30 mm) stellt die Dimensionsstabilität (Schwindung/Quellung) dar.

Alle Ergebnisse zu den gemäß der vorliegenden Anmeldung hergestellten 1K-Reaktionssystemen sowie den hieraus hergestellten Polyurethan-Hartschaumstoffen (Freischäumen) und deren Eigenschaften sind in der Tabelle 3 zusammengefasst.

**Tabelle 3**

| **Beispiel** | | **1 (Vgl.)** | **2 (Erf.)** | **3 (Erf.)** | **4 (Erf.)** |
|---|---|---|---|---|---|
| A-1 | g | 361,3 | 361,7 | 362,5 | 363,8 |
| B-1 | g | 2,49 | 2,19 | 1,68 | 0 |
| C-1 | g | 0,75 | 0,66 | 0,50 | 0,6 |
| D-1 | g | 1,00 | 0,87 | 0,67 | 1 |
| E-1 | g | 74,6 | 74,7 | 74,7 | 74,8 |
| E-2 | g | 46,2 | 46,2 | 46,2 | 46,2 |
| Gesamtmasse der Komponenten A) bis E) | g | 486,3 | 486,3 | 486,3 | 486,3 |
| Kennzahl | | 7000 | 8000 | 10000 | ∞ |
| Anteil der Komponente B-1 an der Gesamtmasse der Komponenten A) bis E) | Gew.-% | 0,51 | 0,45 | 0,35 | 0 |
| Zellgröße | - | 3 | 3 | 3 | 3 |
| Schwindung des PUR-Hartschaumstoffes, gemessen nach 1 Tag | % | 2,8 | 0 | 0 | -0,3 |
| Abbindezeit | s | 11 | 12 | 11 | 11 |
| Flammhöhe nach EN ISO 11925-2 (2010) | mm | 160 | 127 | 122 | 108 |
| Brandklasse nach DIN EN 13501-1 (2010) | | F | E | E | E |

Die Ergebnisse des Brandtests nach DIN EN ISO 11925-2 (2010) sind in der Tabelle 3 angegeben. Der Einsatz der Komponente B-1 mit einem Anteil von mehr als 0,45 Gew.-% an der Gesamtmasse der Komponenten A) bis E) führt in Vergleichsbeispiel 1 zu einem PUR-Hartschaumstoff mit einer Flammhöhe von 160 mm im Kleinbrennertest nach EN ISO 11925-2 (2010). Der PUR-Hartschaumstoff aus Vergleichsbeispiel 1 wird somit nach DIN EN 13501-1 (2010) in die Brandklasse F eingeordnet. Die PUR-Hartschaumstoffe in den erfindungsgemäßen Beispielen 2 bis 4 mit einem Anteil von 0,00 bis 0,45 Gew.-% der Komponente B-1 an der Gesamtmasse der Komponenten A) bis E) erfüllen jeweils die Anforderungen für die Brandklasse E nach DIN EN 13501-1 (2010).

Weiterhin ist in Tabelle 3 die Schwindung der erhaltenen PUR-Hartschaumstoffe nach einem Tag angegeben. Die erfindungsgemäßen PUR-Hartschaumstoffe aus den erfindungsgemäßen Beispielen 2 bis 4 weisen nach einem Tag eine geringe bis gar keine Schwindung des erhaltenen PUR-Hartschaumstoffes auf. In Vergleichsbeispiel 1 weist der PUR-Hartschaumstoff eine Schwindung nach einem Tag von 2,8 % auf. Das erfindungsgemäße Verfahren hat dabei keinen Einfluss auf die Zellgröße des erhaltenen PUR-Hartschaumstoffs.

## Patentansprüche

1. Einkomponenten-Reaktionssystem zur Herstellung von Polyurethan-Hartschaumstoffen, umfassend die folgenden Bestandteile:
A) eine organische Polyisocyanatkomponente die teilweise als Präpolymer vorliegt (im folgenden genannt "Semipräpolymer"),
wobei die organische Polyisocyanatkomponente A) weiterhin **dadurch gekennzeichnet ist, dass** der Gehalt an freien, nicht mit Polyol reagierten Isocyanaten, gemessen wie in der Beschreibung definiert, > 1 Gew.-% bis < 25 Gew.-%, bezogen auf das Gesamtgewicht der Komponente A), beträgt, und dass
der NCO-Gehalt > 7,5 Gew.-% bis 13,0 Gew.-%, insbesondere > 8,0 bis < 13,0 Gew.-%, bezogen auf das Gesamtgewicht der Komponente A), beträgt,
B) ggfls. eine isocyanatreaktive Komponente, deren isocyanatreaktiven funktionellen Gruppen ausschließlich solche mit wenigstens einem Zerewitinoff-aktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0 °C und gegebenenfalls Co-Treibmittel, sowie
F) gegebenenfalls Hilfs- und Zusatzstoffe,
**dadurch gekennzeichnet, dass**
das Semipräpolymer durch Umsetzung von
A.1) einer organischen Polyisocyanatkomponente A.1), welche zu mindestens 80 Gew.-% aus den monomeren Diphenylmethandiisocyanaten 2,4'-MDI, 2,2'-MDI und/oder 4,4'-MDI besteht, und
A.2) einer Polyolkomponente A.2) mit einer Funktionalität Fₙ (bezogen auf die Zerewitinoff-aktiven Wasserstoffatome in der Polyolkomponente) von ≥ 2,0 bis ≤ 3,0 und einer OH-Zahl von 28 bis 350 mg KOH/g gebildet wird,
und
wobei der Anteil der Komponente B) 0,00 Gew.-% bis 0,45 Gew.-%, bezogen auf das Gesamtgewicht der Komponenten A) bis F), beträgt.

2. Einkomponenten-Reaktionssystem gemäß Anspruch 1, **dadurch gekennzeichnet, dass** die Polyolkomponente A.2) eine Funktionalität Fₙ von 2,2 bis 2,8 aufweist.

3. Einkomponenten- Reaktionssystem gemäß Anspruch 1 oder 2, **dadurch gekennzeichnet, dass** der NCO-Gehalt > 8,0 bis 13,0 Gew.-%, bezogen auf das Gesamtgewicht der Komponente A), beträgt.

4. Einkomponenten-Reaktionssystem gemäß einem der Ansprüche 1 bis 3, **dadurch gekennzeichnet, dass** die isocyanatreaktive Komponente B) ein Polyetherpolyol mit einer Funktionalität Fₙ von 2,0 bis 4,0 und mit einem Ethylenoxid - Anteil von > 50 Gew.-% (bezogen auf die Massensumme der enthaltenen Alkylenoxide) enthält.

5. Einkomponenten-Reaktionssystem gemäß einem der Ansprüche 1 bis 4, **dadurch gekennzeichnet, dass** als Schaumstabilisator C) Verbindungen mit einer Strukturformel (I) 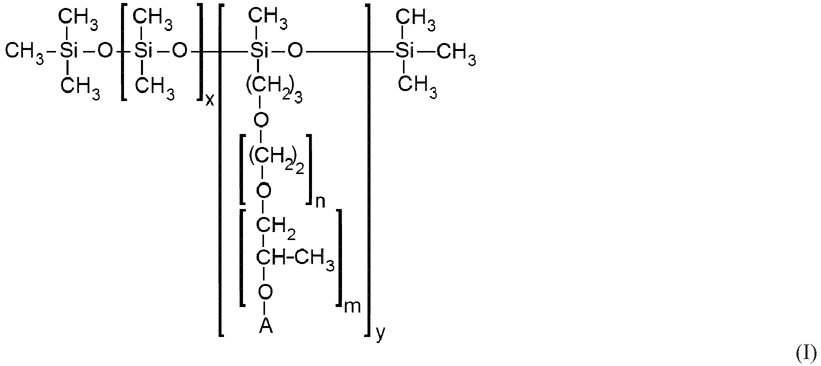 mit x, y = ganze Zahl > 0 und x/y = Dimethylsiloxananteil < 5,
n, m= ganze Zahl > 0 und n/m = Ethylenoxid / Propylenoxid - Verhältnis;
A = Aryl, Alkyl oder H
eingesetzt werden.

6. Einkomponenten-Reaktionssystem gemäß einem der Ansprüche 1 bis 5, **dadurch gekennzeichnet, dass** das Einkomponenten-Reaktionssystem weniger als 5 Gew.-% eines Flammschutzmittels, bezogen auf das Gesamtgewicht der Komponenten A) bis F), ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen enthält.

7. Einkomponenten-Reaktionssystem gemäß einem der Ansprüche 1 bis 6 umfassend die folgenden Komponenten:
68 bis 90 Gew.-% organische Polyisocyanatkomponente A),
0,00 bis 0,45 Gew.-% isocyanatreaktive Komponente B),
0,1 bis 1,0 Gew.-% eines Schaumstoffstabilisators C),
0,1 bis 1,0 Gew.-% an Katalysator D) und
9,8 bis 30 Gew.-% mindestens eines physikalischen Treibmittels mit einem Siedepunkt von weniger als 0 °C sowie gegebenenfalls Co-Treibmittel (Komponente E), und
0 bis 20 Gew.-% Hilfs- und Zusatzstoffe (Komponente F),
jeweils bezogen auf das Gesamtgewicht der Komponenten A) bis F).

8. Verfahren zur Herstellung eines Einkomponenten-Reaktionssystems, umfassend die Schritte
i) Herstellung einer organischen Polyisocyanatkomponente A) mit einem Gehalt an freien, nicht reagierten Isocyanaten, gemessen wie in der Beschreibung definiert, von > 1 Gew.-% bis < 25 Gew.-%, und einem NCO-Gehalt von > 8 Gew.-% bis 13 Gew.-%, jeweils bezogen auf das Gesamtgewicht der Komponente A),
durch Umsetzung von
a) einer organischen Polyisocyanatkomponente A.1), welche zu mindestens 80 Gew.-% aus monomerem MDI besteht, und
b) einer Polyolkomponente A.2) mit einer Funktionalität Fₙ (bezogen auf die Zerewitinoff-aktiven Wasserstoffatome in der Polyolkomponente) von ≥ 2,0 bis ≤ 3,0 und einer OH-Zahl von 28 - 300 mg KOH/g
zu einem Semipräpolymer, und
(optional) Abmischen des so erhaltenen Semipräpolymers mit weiteren Polyisocyanaten
ii) Umsetzung des in Schritt i) erhaltenen organische Polyisocyanatkomponente A) mit B) einer isocyanatreaktiven Komponente, deren isocyanatreaktiven funktionellen Gruppen ausschließlich solche mit wenigstens einem Zerewitinoff-aktiven Wasserstoffatom sind,
in Anwesenheit von
C) mindestens einem Schaumstabilisator,
D) mindestens einem Katalysator, der geeignet ist, die Reaktion des Semipräpolymers mit der Luftfeuchtigkeit zu katalysieren,
E) mindestens einem physikalischen Treibmittel mit einem Siedepunkt von weniger als 0 °C und gegebenenfalls Co-Treibmittel, sowie
F) gegebenenfalls Hilfs- und Zusatzstoffen.

9. Verfahren zur Herstellung eines Polyurethan-Hartschaumstoffs, erhältlich durch Vermischen und Umsetzen der Komponenten A) bis F) eines Einkomponenten-Reaktionssystems nach einem der Ansprüche 1 bis 7 unter Einwirkung von Feuchtigkeit.

10. Verfahren zur Herstellung eines Polyurethan-Hartschaumstoffs, umfassend die Schritte
a) Herstellung eines Einkomponenten-Reaktionssystems nach einem Verfahren gemäß Anspruch 8 und
b) Einwirken von Feuchtigkeit auf das in Schritt a) hergestellte Einkomponenten-Reaktionssystem.

11. Polyurethan-Hartschaumstoff, erhältlich nach einem Verfahren gemäß Anspruch 9 oder 10.

12. Polyurethan-Hartschaumstoff gemäß Anspruch 11, **dadurch gekennzeichnet, dass** er weniger als 5 Gew.-% eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen enthält, und gleichzeitig eine Brandklassifizierung E nach der Brandschutznorm DIN EN 13501-1 (2010) erzielt.

13. Verwendung eines Einkomponenten-Reaktionssystems nach einem der Ansprüche 1 bis 7 als 1K-Montageschaumstoff, wobei das Einkomponenten-Reaktionssystem in einen Druckbehälter eingefüllt ist.

14. Druckbehälter, insbesondere ein Einwegdruckbehälter, enthaltend ein Einkomponenten-Reaktionssystem nach einem der Ansprüche 1 bis 7.

15. Verwendung von Polyurethan-Hartschaumstoffen gemäß Anspruch 11 oder 12 für Anwendungen in der Bauindustrie.

## Claims

1. One-component reaction system for producing rigid polyurethane foams, comprising the following constituents:
A) an organic polyisocyanate component which is partly in the form of a prepolymer (referred to as "semi-prepolymer" hereinbelow),
wherein the organic polyisocyanate component A) is further **characterized in that** the content of free isocyanates not reacted with polyol measured as defined in the description is > 1% by weight to < 25% by weight based on the total weight of the component A) and **in that**
the NCO content is > 7.5% by weight to 13.0% by weight, in particular > 8.0 to < 13.0% by weight, based on the total weight of the component A),
B) optionally an isocyanate-reactive component whose isocyanate-reactive functional groups are exclusively those having at least one Zerewitinoff-active hydrogen atom,
C) at least one foam stabilizer,
D) at least one catalyst suitable for catalyzing the reaction of the semi-prepolymer with atmospheric humidity,
E) at least one physical blowing agent having a boiling point of less than 0°C and optionally co-blowing agents and
F) optionally assistant and additive substances,
**characterized in that**
the semi-prepolymer is formed by reaction of
A.1) an organic polyisocyanate component A.1) consisting to an extent of at least 80% by weight of the monomeric diphenylmethane diisocyanates 2,4'-MDI, 2,2'-MDI and/or 4,4'-MDI and
A.2) a polyol component A.2) having a functionality Fₙ (based on the Zerewitinoff-active hydrogen atoms in the polyol component) of ≥ 2.0 to ≤ 3.0 and an OH number of 28 to 350 mg KOH/g,
and
wherein the proportion of the component B) is 0.00% by weight to 0.45% by weight based on the total weight of the components A) to F).

2. One-component reaction system according to Claim 1, **characterized in that** the polyol component A.2) has a functionality Fₙ of 2.2 to 2.8.

3. One-component reaction system according to Claim 1 or 2, **characterized in that** the NCO content is > 8.0% to 13.0% by weight based on the total weight of the component A) .

4. One-component reaction system according to any of Claims 1 to 3, **characterized in that** the isocyanate-reactive component B) contains a polyether polyol having a functionality Fₙ of 2.0 to 4.0 and having an ethylene oxide proportion of > 50% by weight (based on the sum of the masses of the alkylene oxides present) .

5. One-component reaction system according to any of Claims 1 to 4, **characterized in that** as the foam stabilizer C) compounds having a structural formula (I) 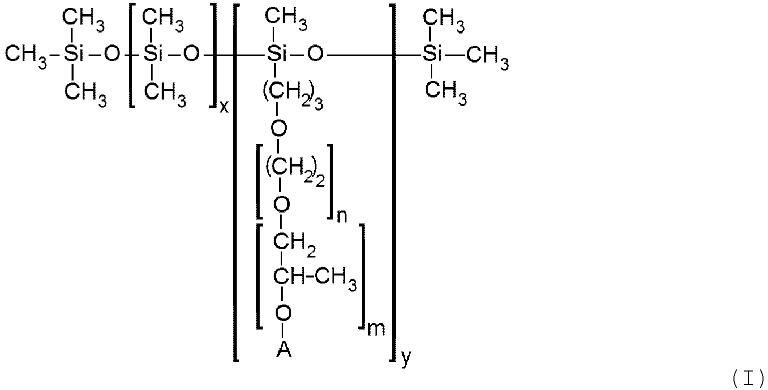 where x, y = integer > 0 and x/y = dimethylsiloxane proportion < 5,
n, m = integer > 0 and n/m = ethylene oxide/propylene oxide ratio;
A = aryl, alkyl or H
are employed.

6. One-component reaction system according to any of Claims 1 to 5, **characterized in that** the one-component reaction system contains less than 5% by weight of a flame retardant based on the total weight of the components A) to F) selected from the group of compounds consisting of halogenated phosphates, aryl phosphates, alkyl phosphates, alkyl aryl phosphates, phosphonates and flame retardants without polyisocyanate- and/or polyol-reactive groups.

7. One-component reaction system according to any of Claims 1 to 6 comprising the following components:
68% to 90% by weight of organic polyisocyanate component A),
0.00% to 0.45% by weight of isocyanate-reactive component B),
0.1% to 1.0% by weight of a foam stabilizer C),
0.1% to 1.0% by weight of catalyst D) and
9.8% to 30% by weight of at least one physical blowing agent having a boiling point of less than 0°C and optionally co-blowing agents (component E) and
0% to 20% by weight of assistant and additive substances (component F),
in each case based on the total weight of the components A) to F).

8. Process for producing a one-component reaction system comprising the steps of
i) producing an organic polyisocyanate component A) having a content of free, unreacted isocyanates measured as defined in the description of > 1% by weight to < 25% by weight and an NCO content of > 8% by weight to 13% by weight, in each case based on the total weight of the component A),
by reacting
a) an organic polyisocyanate component A.1) consisting to an extent of at least 80% by weight of monomeric MDI and
b) a polyol component A.2) having a functionality Fₙ (based on the Zerewitinoff-active hydrogen atoms in the polyol component) of ≥ 2.0 to ≤ 3.0 and an OH number of 28 - 300 mg KOH/g
to afford a semi-prepolymer and
(optionally) blending the thus obtained semi-prepolymer with further polyisocyanates
ii) reacting the organic polyisocyanate component
A) obtained in step i) with
B) an isocyanate-reactive component whose isocyanate-reactive functional groups are exclusively those having at least one Zerewitinoff-active hydrogen atom in the presence of
C) at least one foam stabilizer,
D) at least one catalyst suitable for catalyzing the reaction of the semi-prepolymer with atmospheric humidity,
E) at least one physical blowing agent having a boiling point of less than 0°C and optionally co-blowing agents and
F) optionally assistant and additive substances.

9. Process for producing a rigid polyurethane foam obtainable by mixing and reacting the components A) to F) of a one-component reaction system according to any of Claims 1 to 7 with exposure to moisture.

10. Process for producing a rigid polyurethane foam comprising the steps of
a) producing a one-component reaction system by a process according to Claim 8 and
b) exposure of the one-component reaction system produced in step a) to moisture.

11. Rigid polyurethane foam obtainable by a process according to Claim 9 or 10.

12. Rigid polyurethane foam according to Claim 11, **characterized in that** it contains less than 5% by weight of a flame retardant selected from the group of compounds consisting of halogenated phosphates, aryl phosphates, alkyl phosphates, alkyl aryl phosphates, phosphonates and flame retardants without polyisocyanate- and/or polyol-reactive groups while simultaneously achieving fire classification E according to the fire safety standard DIN EN 13501-1 (2010).

13. Use of a one-component reaction system according to any of Claims 1 to 7 as a 1K expanding foam, wherein the one-component reaction system has been filled into a pressurized container.

14. Pressurized container, in particular a single-use pressurized container, containing a one-component reaction system according to any of Claims 1 to 7.

15. Use of rigid polyurethane foams according to Claim 11 or 12 for applications in the construction industry.

## Revendications

1. Système de réaction monocomposant, destiné à la production de mousses rigides de polyuréthane, comprenant les constituants suivants :
A) un composant polyisocyanate organique qui se trouve en partie sous forme de prépolymère (dénommé ci-après « semi-prépolymère »),
le composant polyisocyanate organique A) étant en outre **caractérisé en ce que** la teneur en isocyanates libres, n'ayant pas réagi avec un polyol, mesurée comme défini dans la description, vaut de > 1 % en poids à < 25 % en poids, par rapport au poids total du composant A), et **en ce que**
la teneur en groupes NCO vaut de > 7,5 % en poids à 13,0 % en poids, en particulier de > 8,0 à < 13,0 % en poids, par rapport au poids total du composant A),
B) éventuellement un composant réactif avec des isocyanates, dont les groupes fonctionnels réactifs avec des isocyanates sont exclusivement ceux comportant au moins un atome d'hydrogène actif selon la méthode de Zerewitinoff,
C) au moins un stabilisant de mousse,
D) au moins un catalyseur qui est approprié pour catalyser la réaction du semi-prépolymère avec l'humidité de l'air,
E) au moins un agent porogène physique ayant un point d'ébullition de moins de 0 °C et éventuellement un co-agent porogène, ainsi que
F) éventuellement des adjuvants et additifs,
**caractérisé en ce que**
le semi-prépolymère est formé par mise en réaction de
A.1) un composant polyisocyanate organique A.1) qui consiste à raison d'au moins 80 % en poids en les diisocyanates de diphénylméthane monomères 2,4'-MDI, 2,2'-MDI et/ou 4,4'-MDI, et
A.2) un composant polyol A.2) ayant une fonctionnalité Fₙ (basée sur les atomes d'hydrogène actifs selon la méthode de Zerewitinoff dans le composant polyol) de ≥ 2,0 à ≤ 3,0 et un indice de groupes OH de 28 à 350 mg de KOH/g,
et
la proportion du composant B) valant de 0,00 % en poids à 0,45 % en poids, par rapport au poids total des composants A) à F).

2. Système de réaction monocomposant selon la revendication 1, **caractérisé en ce que** le composant polyol A.2) présente une fonctionnalité Fₙ de 2,2 à 2,8.

3. Système de réaction monocomposant selon la revendication 1 ou 2, **caractérisé en ce que** la teneur en groupes NCO vaut de > 8,0 à 13,0 % en poids, par rapport au poids total du composant A).

4. Système de réaction monocomposant selon l'une quelconque des revendications 1 à 3, **caractérisé en ce que** le composant B) réactif avec des isocyanates contient un polyétherpolyol ayant une fonctionnalité Fₙ de 2,0 à 4,0 et ayant une proportion d'oxyde d'éthylène de > 50 % en poids (par rapport à la somme des masses des oxydes d'alkylène contenus).

5. Système de réaction monocomposant selon l'une quelconque des revendications 1 à 4, **caractérisé en ce qu'**on utilise en tant que stabilisant de mousse C) des composés ayant une formule développée (I) 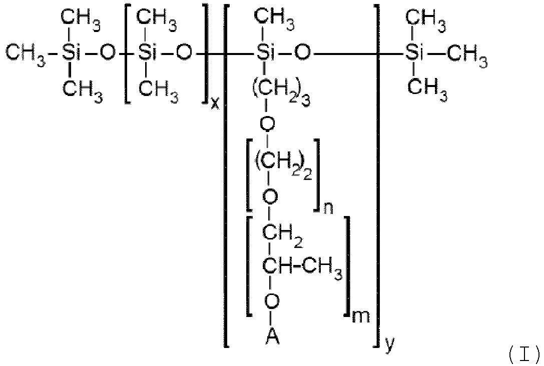 où x, y = nombre entier > 0 et x/y = proportion de diméthylsiloxane < 5,
n, m = nombre entier > 0 et n/m = rapport oxyde d'éthylène/oxyde de propylène ;
A = aryle, alkyle ou H.

6. Système de réaction monocomposant selon l'une quelconque des revendications 1 à 5, **caractérisé en ce que** le système de réaction monocomposant contient moins de 5 % en poids, par rapport au poids total des composants A) à F), d'un agent ignifuge choisi dans le groupe des composés constitué par les arylphosphates, alkylphosphates, alkyl-aryl-phosphates, phosphonates, phosphates halogénés, ainsi que les agents ignifuges sans groupes réactifs vis-à-vis de polyisocyanates et/ou vis-à-vis de polyols.

7. Système de réaction monocomposant selon l'une quelconque des revendications 1 à 6, comprenant les composants suivants :
68 à 90 % en poids de composant polyisocyanate organique A),
0,00 à 0,45 % en poids de composant B) réactif avec des isocyanates,
0,1 à 1,0 % en poids d'un stabilisant de mousse C),
0,1 à 1,0 % en poids de catalyseur D) et
9,8 à 30 % en poids d'au moins un agent porogène physique ayant un point d'ébullition de moins de 0 °C ainsi qu'éventuellement un co-agent porogène (composant E), et
0 à 20 % en poids d'adjuvants et additifs (composant F), chaque fois par rapport au poids total des composants A) à F) .

8. Procédé pour la préparation d'un système de réaction monocomposant, comprenant les étapes
i) préparation d'un composant polyisocyanate organique A) ayant une teneur en isocyanates libres, n'ayant pas réagi, mesurée comme défini dans la description, de > 1 % en poids à < 25 % en poids, et une teneur en groupes NCO de > 8, 0 % en poids à 13, 0 % en poids, chaque fois par rapport au poids total du composant A),
par mise en réaction de
a) un composant polyisocyanate organique A.1) qui consiste à raison d'au moins 80 % en poids en MDI monomère, et
b) un composant polyol A.2) ayant une fonctionnalité Fₙ (basée sur les atomes d'hydrogène actifs selon la méthode de Zerewitinoff dans le composant polyol) de ≥ 2,0 à ≤ 3,0 et un indice de groupes OH de 28 - 300 mg de KOH/g,
conduisant à un semi-prépolymère, et
(en option) mélange du semi-prépolymère ainsi obtenu avec des polyisocyanates supplémentaires
ii) mise en réaction du composant polyisocyanate organique A) obtenu dans l'étape i) avec B) un composant réactif avec des isocyanates, dont les groupes fonctionnels réactifs avec des isocyanates sont exclusivement ceux comportant au moins un atome d'hydrogène actif selon la méthode de Zerewitinoff,
en présence de
C) au moins un stabilisant de mousse,
D) au moins un catalyseur qui est approprié pour catalyser la réaction du semi-prépolymère avec l'humidité de l'air,
E) au moins un agent porogène physique ayant un point d'ébullition de moins de 0 °C et éventuellement un co-agent porogène, ainsi que
F) éventuellement des adjuvants et additifs.

9. Procédé pour la production d'une mousse rigide de polyuréthane, pouvant être obtenue par mélange et mise en réaction des composants A) à F) d'un système de réaction monocomposant selon l'une quelconque des revendications 1 à 7, sous l'effet de l'humidité.

10. Procédé pour la production d'une mousse rigide de polyuréthane, comprenant les étapes consistant à
a) préparer un système de réaction monocomposant conformément à un procédé selon la revendication 8 et
b) faire agir de l'humidité sur le système de réaction monocomposant préparé dans l'étape a).

11. Mousse rigide de polyuréthane pouvant être obtenue conformément à un procédé selon la revendication 9 ou 10.

12. Mousse rigide de polyuréthane selon la revendication 11, **caractérisée en ce qu'**elle contient moins de 5 % en poids d'un agent ignifuge choisi dans le groupe des composés constitué par les arylphosphates, alkylphosphates, alkyl-aryl-phosphates, phosphonates, phosphates halogénés ainsi que les agents ignifuges sans groupes réactifs vis-à-vis de polyisocyanates et/ou vis-à-vis de polyols, et en même temps atteint une classification au feu E selon la norme de protection incendie DIN EN 13501-1 (2010).

13. Utilisation d'un système de réaction monocomposant selon l'une quelconque des revendications 1 à 7 en tant que mousse de montage monocomposant, dans laquelle le système de réaction monocomposant est introduit dans un récipient sous pression.

14. Récipient sous pression, en particulier un récipient sous pression à usage unique, contenant un système de réaction monocomposant selon l'une quelconque des revendications 1 à 7.

15. Utilisation de mousses rigides de polyuréthane selon la revendication 11 ou 12, pour des applications dans l'industrie du bâtiment.
